# EUROPEAN PATENT SPECIFICATION

(11) **EP 3 343 424 B1**
(45) Date of publication and mention of the grant of the patent: **22.12.2021**
(21) Application number: 16845741.4
(22) Date of filing: 14.09.2016
(51) Int. Cl.: G06F 21/57, G06F 21/51

(54) **CONTROL BOARD SECURE START METHOD, AND SOFTWARE PACKAGE UPGRADE METHOD AND DEVICE**
SICHERES STARTVERFAHREN FÜR STEUERTAFEL SOWIE VERFAHREN UND VORRICHTUNG ZUR SOFTWAREPAKETAKTUALISIERUNG
PROCÉDÉ DE DÉMARRAGE SÉCURISÉ DE CARTE DE COMMANDE, ET PROCÉDÉ ET DISPOSITIF DE MISE À JOUR DE PROGICIEL

(30) Priority: 16.09.2015 CN 201510589849
(43) Date of publication of application: 04.07.2018
(73) Proprietor: Huawei Technologies Co., Ltd., Longgang District Shenzhen, Guangdong 518129 (CN)
(72) Inventor: XU, Wei, Shenzhen Guangdong 518129 (CN)
(74) Representative: Thun, Clemens
(86) International application number: PCT/CN2016/099115
(87) International publication number: WO 2017/045627

(56) References cited:
- WO-A1-2013/015910
- WO-A1-2014/206171
- CN-A- 102 833 745
- CN-A- 103 354 496
- CN-A- 105 117 651

## Description

### TECHNICAL FIELD

The present invention relates to the field of communications technologies, and in particular, to a method and an apparatus for controlling secure boot of a board.

### BACKGROUND

As threats from hackers increase, operators pose a requirement on a trusted environment of telecommunications equipment, for example, a cryptographic manner is required for checking software when a multimode base station boots. If the check fails, the multimode base station cannot be connected to a network.

Generally, an equipment vendor of the telecommunications equipment pregenerates an asymmetrical key pair as a vendor key. The equipment vendor safekeeps a private key in the key pair, and signs a to-be-released software package by using the private key. A public key in the key pair is released along with the software package.

When a board in the telecommunications equipment securely boots, a check needs to be performed on software packages that arc loaded level by level, and a check process is that the public key released along with the software package is used to check a signature of the software package. If the check succeeds, the software package is loaded, and the key pair is used to store the software package; or if the check fails, the software package is not loaded. In this way, a software package that is unauthorized or tampered with cannot be loaded.

When the board boots, and if the software package passes the check, it is ensured that the software package is released by the vendor. If all software packages used for the board boot can pass the check level by level, a chain of trust is constructed, and it is ensured that an initial software operating environment of the board is secure and reliable.

For example, WO 2014/206171 A1 refers to a public key cryptography processing method, device and system, which are used for storing and managing an RSA key in a device. The method comprises: acquiring an instruction to update software, wherein the instruction to update software carries a software package, a first public key generated by a software publisher, and a signature file which is generated by performing digital signing on the software package using a first private key generated by the software publisher; performing digital signature verification on the software package by using the first public key; performing digital signing again on the software package which has passed the digital signature verification using a second private key stored locally, and locally storing the generated signature data.

Further, WO 2013/015910A1 refers to an executing first computing module verifying the run-time provenance of an unverified second computing module. A signed certificate identifying an author of the second computing module is received at the first computing module. An association between the signed certificate and the second computing module is verified. A first provenance certificate and associated private key signed by the first computing module and identifying a runtime provenance of the second computing module is then generated, and the first provenance certificate is published to the second computing module. A chain of signed certificates, including provenance certificates and a static identification certificates, can be published. Each provenance certificate in the chain verifies the integrity of a layer of execution, and the plurality of static identification certificates identifies a respective author of the computing module associated with each layer of software. The provenance of the second computing module can be recursively traced through the published chain of certificates.

In the prior art, one software package may be used for multiple boards of a same model. Therefore, for different boards of a same model, it is difficult to release software packages that are signed by using different private keys. Because it is impossible to release a software package for each board, a same key pair needs to be stored. Therefore, the key pair released along with the software package is the key pair stored in the board. A situation in which multiple boards use a same key pair appears inevitably, and generally, all boards use a same key pair.

Therefore, once the key pair used by the equipment vendor for signing the software package is leaked, a batch of (or all) installed boards in the existing network are exposed to an attacker, and secure boot cannot be ensured.

### SUMMARY

To resolve the problem that in the prior art, boards cannot securely boot in batches because of leakage of a key pair, embodiments of the present invention provide a method for controlling secure boot of a board, so as to ensure that other boards still can securely boot when a key pair in a software package is leaked. The embodiments of the present invention further provide corresponding devices.

In a first aspect a method for upgrading a software package performed an apparatus for controlling a secure boot of a board is provided, the method comprising:
**a.)** obtaining a new software package of the board,
**b.)** using a software package public key contained in the new software package to check an original signature of the new software package, wherein the original signature is contained in a secure world of a central processing unit on the board, wherein the secure world of the central processing unit is physically isolated from a normal world of the central processing unit,
**c.)** after the original signature of the new software package passes the check, re-signing the new software package by using a board private key of the board in the secure world, thereby arriving at a re-signature of the new software package, wherein the re-signature is used to check security of the software package when the board boots,
**d.)** after storing the new software package and the re-signature of the new software package in the board, replacing, in the board, a corresponding software package of an earlier version and a re-signature corresponding to the software package of the earlier version with the new software package and the re-signature of the new software package, wherein the software package of the earlier version comprises a software package public key of the earlier version.

In a first implementation form of the first aspect the check and the re-signing are completed at a time in a trusted environment of the secure world.

In a second aspect an apparatus for controlling secure boot of a board is provided, wherein the apparatus is configured to execute the above methods.

In a third aspect a readable storage medium is provided comprising instructions, which, when executed by a computer, cause the computer to carry out any of the above methods.

According to the method for controlling secure boot of a board provided in the embodiments of the present invention, one set of boards include two key pairs: a board public key, a board private key, a software package public key, and a software package private key. For a signature of a software package that passes a check, the board private key is further used to re-sign the software package, thereby improving storage security of the software package. In addition, a board private key and a board public key of each board are different from board private keys and board public keys of other boards. Therefore, even if a board public key and a board private key of a board are cracked by a hacker, booting of other boards is not affected.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person skilled in the art may still derive other drawings from these accompanying drawings without creative efforts.
FIG. 1 is a schematic diagram of a secure world and a normal world of a central processing unit;
FIG. 2 is schematic diagram of a process of re-signing a software package according to an embodiment of the present invention;
FIG. 3 is a schematic diagram of an embodiment of a method for controlling secure boot of a board according to an embodiment of the present invention;
FIG. 4 is a schematic diagram of an embodiment of a method for upgrading a software package according to an embodiment of the present invention;
FIG. 5 is a schematic diagram of an embodiment of an apparatus for controlling secure boot of a board according to an embodiment of the present invention;
FIG. 6 is a schematic diagram of another embodiment of an apparatus for controlling secure boot of a board according to an embodiment of the present invention;
FIG. 7 is a schematic diagram of another embodiment of an apparatus for controlling secure boot of a board according to an embodiment of the present invention;
FIG. 8 is a schematic diagram of an embodiment of an apparatus for upgrading a software package according to an embodiment of the present invention;
FIG. 9 is a schematic diagram of another embodiment of an apparatus for upgrading a software package according to an embodiment of the present invention;
FIG. 10 is a schematic diagram of another embodiment of an apparatus for controlling secure boot of a board according to an embodiment of the present invention; and
FIG. 11 is a schematic diagram of another embodiment of an apparatus for upgrading a software package according to an embodiment of the present invention.

### DESCRIPTION OF EMBODIMENTS

Embodiments of the present invention provide a method for controlling secure boot of a board, a method for upgrading a software package, and at the same time, a method for revoking a leaked software package public key. The methods provided in the embodiments of the present invention can ensure that other boards still can securely boot when a key pair in a software package is leaked. The embodiments of the present invention further provide corresponding apparatuses. Details are separately illustrated in the following.

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person skilled in the art based on the embodiments of the present invention without creative efforts shall fall within the protection scope of the present invention.

For ease of understanding, a board is first described briefly.

A board is hardware in communications equipment. The board according to an embodiment of the present invention generates a different asymmetrical key pair for each board during a production phase. The asymmetrical key pair is referred to as a board key pair in this embodiment of the present invention, and includes a board private key and a board public key. It needs to be ensured that the board key pair cannot be tampered with, and the board private key cannot be read from the outside. Generally, in a security module of a chip, after being generated, the board private key is directly programmed in the security module (for example, eFuse) of the chip, and cannot be tampered with or directly accessed, and can be accessed only by using a hardware security engine. The board public key may be stored on a flash memory. However, a hash value of the board public key is stored in the eFuse for preventing from being tampered with.

A corresponding software package needs to be loaded when the board boots, and after the software package is successfully loaded, the board completes a boot process. However, the software package is applicable to a batch of boards. When the software package is released, there is a corresponding software package key pair, including a software package public key and software package private key. The software package private key is preserved by a vendor, and the software package public key is released along with the software package.

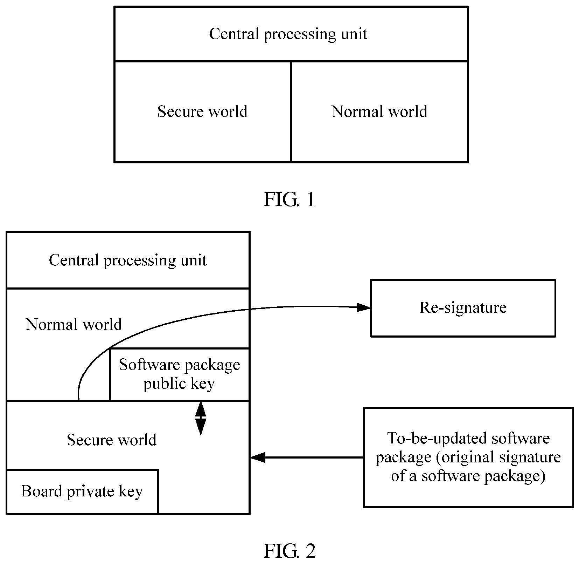

A TrustZone technology physically distributes a central processing unit (CPU) as a secure world (secure world) and a normal world (Normal World). As shown in FIG. 1, security-related behavior such as encryption and decryption are allowed to be run in the physically isolated secure world. An operating system (OS) or application (APP) of the normal world cannot access an address of the secure world.

For software, the secure world and the normal world are separated, and different software can run in the secure world and the normal world. Software of the normal world cannot directly learn an address in the secure world, and can only request the secure world to execute a specific function in a specific manner (for example, by using an interrupt).

After the board is installed on the communications equipment, and when the board is powered on to boot, a CPU on the board checks, by using the board public key of the board, software packages required for board bootup level by level starting from BootROM secure boot code (BSBC). To-be-checked software packages may be selected according to a security requirement. Generally, during the boot, a software package that needs to be loaded to an internal memory needs to be checked. For example, the software packages that need to be checked when the board boots may include a BootROM, a patch, an OS, an APP, or the like. If a signature of a software package matches a signature of the software package on the board, the boot continues; or if a signature of a software package does not match a signature of the software package on the board, the board stops loading and booting. It should be noted that all signatures according to this embodiment of the present invention refer to digital signatures.

If the software package public key is hard-coded in code, after the software package passes the check, the software package public key is also proved to be valid and secure.

Software that resides in the secure world is also a part of the software package, and the software that resides in the secure world is checked by using a signature during the boot. After passing the check, code of the software that resides in the secure world is loaded to and resides in the secure world for running, and is responsible for completing a security-related function.

Actually, in this embodiment of the present invention, the signature checked during the board boot is a re-signature completed by using the board private key in the secure world. When the software package is updated, the vendor releases a new software package, that is, a to-be-updated software package. The new software package carries the software package public key. After obtaining the to-be-updated software package, the CPU places the to-be-updated software package in the secure world, and uses the to-be-updated software package public key to check a signature of the to-be-updated software package in the secure world. The signature may be understood as an original signature of the software package. The original signature is obtained by using the software package private key of software package to sign the software package. After the original signature passes the check, the board private key of the board is used to re-sign the to-be-updated software package in the secure world, and a re-signature of the to-be-updated software package and the to-be-updated software package are associated and stored, so as to obtain an updated software package. If the software package public key is hard-coded in code, after the software package passes the check, the software package public key is also proved to be valid and secure. Because the software package public key is in the software package, after the software package is re-signed, the software package public key is also protected by the re-signature.

In this embodiment of the present invention, a software operating environment of the secure world is physically separated from that of the normal world. Therefore, it is very difficult for a hacker to attack and crack the software operating environment of the secure world. Therefore, checking and re-signing the software package in the secure world are secure and reliable.

A process of the software package from the original signature to the re-signature can be understood by referring to FIG. 2.

The to-be-updated software package uses the software package public key to check the original signature of the to-be-updated software package in the secure world, and, after the original signature of the to-be-updated software package passes the check, uses the board private key to perform a re-signing operation on the to-be-updated software package to obtain the re-signature of the to-be-updated software package.

After the board is powered on, re-signatures of software packages are checked. After re-signatures of all to-be-loaded software packages pass the check when board boots, it indicates that the board successfully boots.

In the prior art, the signature of the software package is used for both software package upgrading and secure boot. Consequently, all boards need to use a same key during the secure boot. However, in this embodiment of the present invention, the two phases, that is, the software package upgrading and the board boot, are separated. Each board re-signs a downloaded software package, so that the software package stored by each board has a different key and signature, and a risk of leakage is reduced. In addition, even if the board public key and the board private key of the board are cracked by a hacker, security of other boards is not affected.

In addition, in this embodiment of the present invention, the check and the re-signing are completed at a time in a trusted environment of the secure world, and a problem of a signature authentication is resolved by using the original signature of the software package.

The present invention is not limited to a specific communications system, and is for a board that supports a secure boot feature, and affects a scenario of booting a trusted board and a scenario of software updating.

In addition, it should be noted that, in this embodiment of the present invention, two additional solutions can be further used to resolve a problem about updating when the asymmetrical key pair is leaked.

### Solution 1:

1. This strategy also requires that an asymmetrical board key pair is preset in a trusted environment in the CPU, but only the board public key needs to be programmed in the trusted environment in the CPU. Because a re-signature is not involved, the board private key does not need to be stored in the CPU, but is kept by an equipment vendor. Asymmetrical board key pairs for all boards are the same.
2. The public key used for checking the software package is released along with a BootROM.
3. After the software package is released, the BootROM is signed and released by using the board private key.
4. When the board boots, the CPU uses the board public key to check that a signature of the BootROM is correct, and the BootROM uses the software package public key to check that a signature of the software package is correct.
5. When the software package public key needs to be updated, the updating is completed by upgrading the BootROM.

In this solution of the present invention, the board key pair and the software package key pair are distinguished from each other, and therefore, updating of a software package key is supported. However, because no re-signing process is performed, a same board key pair is required for all boards, otherwise a digital signature required for upgrading the BootROM cannot be released.

### Solution 2:

Compared with solution 1, in solution 2, multiple board key pairs are embedded in a trusted environment of the board, and these board key pairs are the same for all boards.

When a first board key pair is leaked, the first board key pair is invalidated by using an upgrading or revocation command. During a reboot, because the first board key pair is invalidated, a signature of the BootROM signed by using a private key in the first group of board key pair cannot pass the check, while digital signatures of key pairs that are not revoked are valid. This avoids a condition that all board keys need to be immediately updated when a board key pair is leaked.

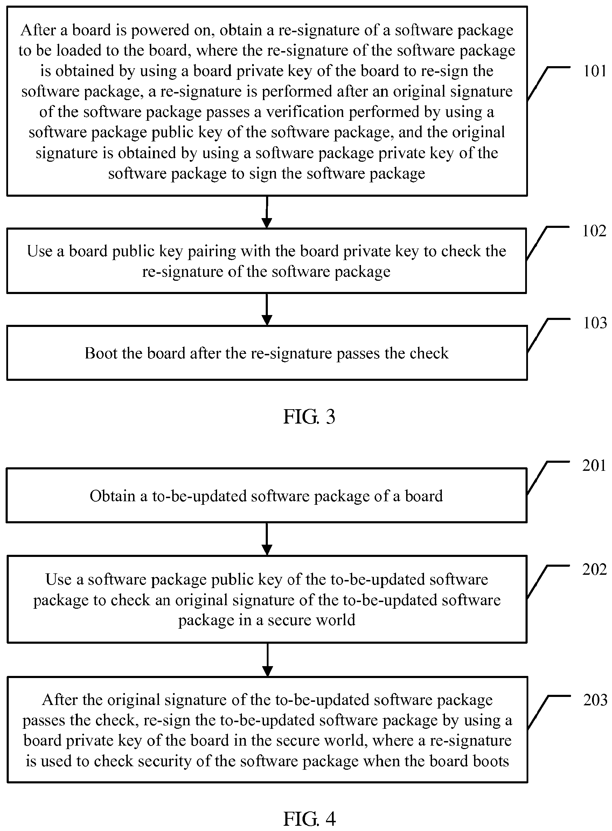

Referring to FIG. 3, an embodiment of a method for controlling secure boot of a board according to an embodiment of the present invention includes:
101. After a board is powered on, obtain a re-signature of a software package to be loaded to the board, where the re-signature of the software package is obtained by using a board private key of the board to re-sign the software package, the re-signature is performed after an original signature of the software package passes a verification performed by using a software package public key of the software package, and the original signature is obtained by using a software package private key of the software package to sign the software package.
102. Use board public key pairing with the board private key to check the re-signature of the software package.
103. Boot the board after the re-signature passes the check.

According to the method for controlling secure boot of a board provided in this embodiment of the present invention, one set of boards include two key pairs: a board public key, a board private key, a software package public key, and a software package private key. For a signature of a software package that passes a check, the board private key is further used to re-sign the software package, thereby improving storage security of the software package. In addition, a board private key and a board public key of each board are different from board private keys and board public keys of other boards. Therefore, even if a board public key and a board private key of a board are cracked by a hacker, booting of other boards is not affected.

Optionally, on the basis of the foregoing embodiment corresponding to FIG. 3, in a first optional embodiment of the method for controlling secure boot of a board provided in this embodiment of the present invention, before the obtaining a re-signature of a software package to be loaded to the board, the method further includes:
obtaining a to-be-updated software package;
using a software package public key of the to-be-updated software package to check an original signature of the to-be-updated software package in a secure world; and
after the original signature of the to-be-updated software package passes the check, re-signing the to-be-updated software package by using the board private key in the secure world.

Optionally, on the basis of the foregoing first optional embodiment, in the first optional embodiment of the method for controlling secure boot of a board provided in this embodiment of the present invention, after storing the to-be-updated software package and a corresponding re-signature of the to-be-updated software package, the method may further include:
replacing a corresponding software package of an earlier version and a re-signature corresponding to the software package of the earlier version with the to-be-updated software package and the re-signature of the to-be-updated software package, where the software package of the earlier version includes a software package public key of the earlier version.

In this embodiment of the present invention, the software package public key is included in the software package. Therefore, in a secure world environment, when one software package public key is leaked, the software package can be revoked by updating the software package, and the software package public key is updated at the same time.

The embodiment or the optional embodiment corresponding to FIG. 3 may be understood by referring to the previously described software updating and board booting solutions. Details are not described herein again.

Referring to FIG. 4, an embodiment of a method for upgrading a software package according to an embodiment of the present invention includes:
201. Obtain a to-be-updated software package of a board.
202. Use a software package public key of the to-be-updated software package to check an original signature of the to-be-updated software package in a secure world.
203. After the original signature of the to-be-updated software package passes the check, re-sign the to-be-updated software package by using a board private key of the board in the secure world, where the re-signature is used to check security of the software package when the board boots.

According to the method for upgrading a software package provided in this embodiment of the present invention, one set of boards include two key pairs: a board public key, a board private key, a software package public key, and a software package private key. For a signature of a software package that passes a check, the board private key is further used to re-sign the software package, thereby improving storage security of the software package. In addition, a board private key and a board public key of each board are different from board private keys and board public keys of other boards. Therefore, even if a board public key and a board private key of a board are cracked by a hacker, booting of other boards is not affected.

Optionally, on the basis of the foregoing embodiment corresponding to FIG. 4, in an optional embodiment of the method for upgrading a software package provided in this embodiment of the present invention, after storing the to-be-updated software package and a corresponding re-signature of the to-be-updated software package, the method may further include:
replacing a corresponding software package of an earlier version and a re-signature corresponding to the software package of the earlier version with the to-be-updated software package and the re-signature of the to-be-updated software package, where the software package of the earlier version includes a software package public key of the earlier version.

In this embodiment of the present invention, the software package public key is included in the software package. Therefore, in a secure world environment, when one software package public key is leaked, the software package can be revoked by updating the software package, and the software package public key is updated at the same time.

The embodiment or the optional embodiment corresponding to FIG. 4 may be understood by referring to the previously described software updating solutions. Details are not described herein again.

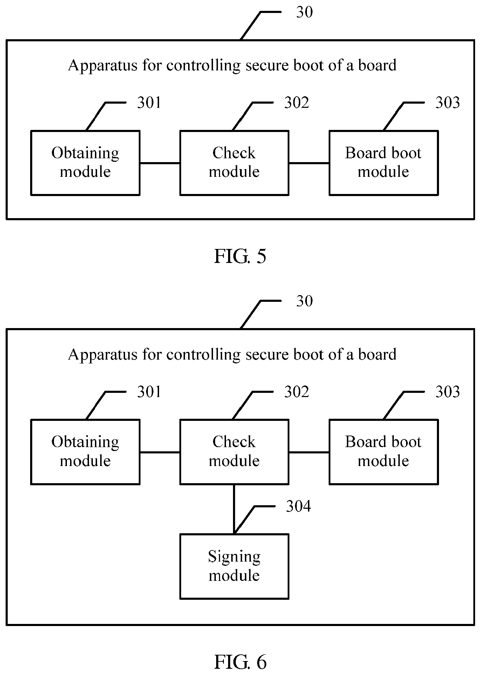

Referring to FIG. 5, an embodiment of an apparatus 30 for controlling secure boot of a board according to an embodiment of the present invention includes:
an obtaining module 301, configured to: after the board is powered on, obtain a re-signature of a software package to be loaded to the board, where the re-signature of the software package is obtained by using a board private key of the board to re-sign the software package, the re-signature is performed after an original signature of the software package passes a verification performed by using a software package public key of the software package, and the original signature is obtained by using a software package private key of the software package to sign the software package;
a check module 302, configured to use a board public key pairing with the board private key to check the re-signature of the software package obtained by the obtaining module 301;
a board boot module 303, configured to boot the board after the re-signature passes the check performed by the check module 302.

In this embodiment of the present invention, after the board is powered on, the obtaining module 301 obtains the re-signature of the software package to be loaded to the board, where the re-signature of the software package is obtained by using the board private key of the board to re-sign the software package, the re-signature is performed after the original signature of the software package passes the verification performed by using the software package public key of the software package, and the original signature is obtained by using the software package private key of the software package to sign the software package; the check module 302 uses the board public key pairing with the board private key to check the re-signature of the software package obtained by the obtaining module 301; and the board boot module 303 boots the board after the re-signature passes the check performed by the check module 302. Compared with that all key pairs of a batch of boards are the same in the prior art, the apparatus for controlling secure boot of a board provided in this embodiment of the present invention includes two key pairs: a board public key, a board private key, a software package public key, and a software package private key. For a signature of a software package that passes a check, the board private key is further used to re-sign the software package, thereby improving storage security of the software package. In addition, a board private key and a board public key of each board are different from board private keys and board public keys of other boards. Therefore, even if a board public key and a board private key of a board are cracked by a hacker, booting of other boards is not affected.

Optionally, on the basis of the foregoing embodiment corresponding to FIG. 5, referring to FIG. 6, in a first optional embodiment of the apparatus 30 for controlling secure boot of a board according to this embodiment of the present invention, the apparatus 30 further includes a signing module 304.

The obtaining module 301 is further configured to obtain a to-be-updated software package.

The check module 302 is further configured to use a software package public key of the to-be-updated software package obtained by the obtaining module 301 to check an original signature of the to-be-updated software package in a secure world.

The signing module 304 is configured to: after the original signature of the to-be-updated software package passes the check performed by the check module 302, re-sign the to-be-updated software package by using the board private key in the secure world.

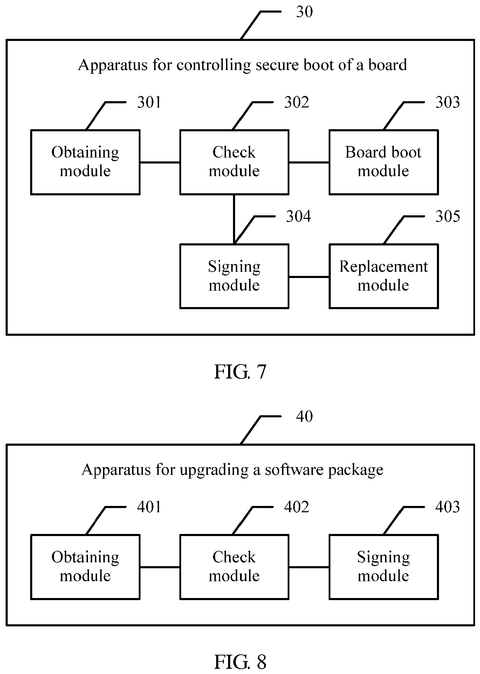

Optionally, on the basis of the foregoing embodiment corresponding to FIG. 6, referring to FIG. 7, in a second optional embodiment of the apparatus 30 for controlling secure boot of a board according to this embodiment of the present invention, the apparatus 30 further includes a replacement module 305.

The replacement module 305 is configured to replace a corresponding software package of an earlier version and a re-signature corresponding to the software package of the earlier version with the to-be-updated software package and a re-signature of the to-be-updated software package obtained by the signing module 304, where the software package of the earlier version includes a software package public key of the earlier version.

The embodiments or the optional embodiments corresponding to FIG. 5 to FIG. 7 may be understood by referring to related descriptions before FIG. 3, and the partial embodiments or optional embodiments in FIG. 3. Details are not described herein again.

Referring to FIG. 8, an embodiment of an apparatus 40 for upgrading a software package according to an embodiment of the present invention includes:
an obtaining module 401, configured to obtain a to-be-updated software package of a board;
a check module 402, configured to use a software package public key of the to-be-updated software package obtained by the obtaining module 401 to check an original signature of the to-be-updated software package in a secure world; and
a signing module 403, configured to: after the original signature of the to-be-updated software package passes the check performed by the check module 402, re-sign the to-be-updated software package by using a board private key of the board in the secure world, where the re-signature is used to check security of the software package when the board boots.

In this embodiment of the present invention, the obtaining module 401 obtains the to-be-updated software package of the board; the check module 402 uses the software package public key of the to-be-updated software package obtained by the obtaining module 401 to check the original signature of the to-be-updated software package in a secure world; the signing module 403 re-signs the to-be-updated software package by using the board private key of the board in the secure world after the original signature of the to-be-updated software package passes the check performed by the check module 402, where the re-signature is used to check security of the software package when the board boots. Compared with that all key pairs of a batch of boards are the same in the prior art, the apparatus for upgrading a software package provided in this embodiment of the present invention includes two key pairs: a board public key, a board private key, a software package public key, and a software package private key. For a signature of a software package that passes a check, the board private key is further used to re-sign the software package, thereby improving storage security of the software package. In addition, a board private key and a board public key of each board are different from board private keys and board public keys of other boards. Therefore, even if a board public key and a board private key of a board are cracked by a hacker, booting of other boards is not affected.

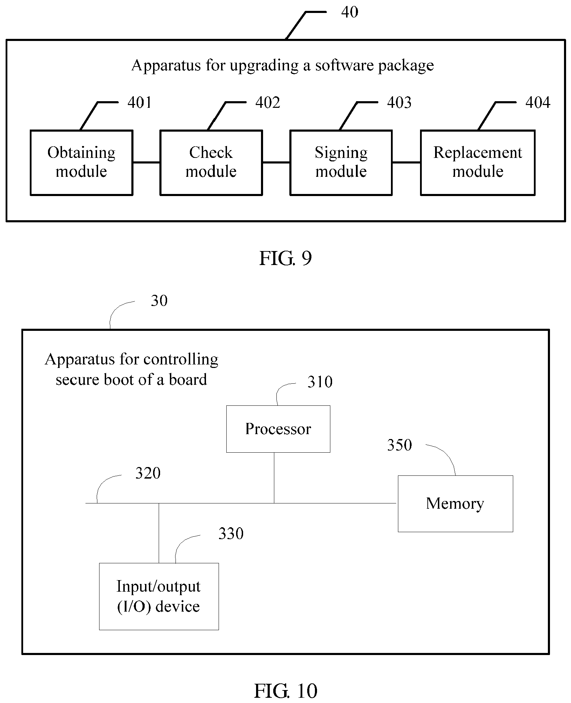

Optionally, on the basis of the foregoing embodiment corresponding to FIG. 8, referring to FIG. 9, in an optional embodiment of the apparatus 40 for upgrading a software package according to this embodiment of the present invention, the apparatus 40 includes a replacement module 404.

The replacement module 404 is configured to replace a corresponding software package of an earlier version and a re-signature corresponding to the software package of the earlier version with the to-be-updated software package and a re-signature of the to-be-updated software package obtained by the signing module, where the software package of the earlier version includes a software package public key of the earlier version.

The embodiments or the optional embodiments corresponding to FIG. 8 and FIG. 9 may be understood by referring to related descriptions about software updating before FIG. 3, and the embodiments or optional embodiments in FIG. 4. Details are not described herein again.

FIG. 10 is a schematic structural diagram of an apparatus 30 for controlling secure boot of a board according to an embodiment of the present invention. The apparatus 30 for controlling secure boot of a board includes a processor 310, a memory 350, and an input/output I/O device 330. The memory 350 may include a read-only memory and a random access memory, and provides an operating instruction and data for the processor 310. A part of the memory 350 may further include a nonvolatile random access memory (NVRAM).

In some implementations, the memory 350 stores the following elements: an executable module or a data structure, or a subset thereof, or an extended set thereof.

In this embodiment of the present invention, by calling the operating instruction stored in the memory 350 (the operating instruction may be stored in an operating system), the processor 310 performs the following operations:
after the board is powered on, obtaining a re-signature of a software package to be loaded to the board, where the re-signature of the software package is obtained by using a board private key of the board to re-sign the software package, the re-signature is performed after an original signature of the software package passes a verification performed by using a software package public key of the software package, and the original signature is obtained by using a software package private key of the software package to sign the software package;
using a board public key pairing with the board private key to check the re-signature of the software package; and
booting the board after the re-signature passes the check.

According to the apparatus for controlling secure boot of a board provided in this embodiment of the present invention, one set of boards include two key pairs: a board public key, a board private key, a software package public key, and a software package private key. For a signature of a software package that passes a check, the board private key is further used to re-sign the software package, thereby improving storage security of the software package. In addition, a board private key and a board public key of each board are different from board private keys and board public keys of other boards. Therefore, even if a board public key and a board private key of a board are cracked by a hacker, controlling, by another processor 310, an operation of the apparatus 30 for controlling secure boot of a board is not affected. The processor 310 may be further referred to as a CPU (Central Processing Unit, central processing unit). The memory 350 may include a read-only memory and a random access memory, and provides an instruction and data for the processor 310. A part of the memory 350 may further include a nonvolatile random access memory (NVRAM). In specific application, all components of the apparatus 30 for controlling secure boot of a board are coupled together by using a bus system 320. In addition to a data bus, the bus system 320 may further include a power bus, a control bus, a status signal bus, and the like. However, for clarity of description, various buses are marked as the bus system 320 in the figure.

The method disclosed in the foregoing embodiment of the present invention may be applied to the processor 310, or be implemented by the processor 310. The processor 310 may be an integrated circuit chip and has a signal processing capability. In an implementation process, the steps in the foregoing method may be completed by means of an integrated logic circuit of hardware in the processor 310 or an instruction in a form of software. The processor 310 may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor 310 may implement or perform the methods, steps, and logical block diagrams that are disclosed in the embodiments of the present invention. The general-purpose processor may be a microprocessor or this processor may be any normal processor, or the like. The steps of the methods disclosed with reference to the embodiments of the present invention may be directly executed and accomplished by means of a hardware decoding processor, or may be executed and accomplished by using a combination of hardware and software modules in the decoding processor. The software module may be located in a mature storage medium in the field, such as a random access memory, a flash memory, a read-only memory, a programmable read-only memory, an electrically erasable programmable memory, or a register. The storage medium is located in the memory 350. The processor 310 reads information in the memory 350, and completes the steps in the foregoing methods in combination with hardware of the processor.

Optionally, the processor 310 is further configured to:
obtain a to-be-updated software package;
use a software package public key of the to-be-updated software package to check an original signature of the to-be-updated software package in a secure world; and
after the original signature of the to-be-updated software package passes the check, re-sign the to-be-updated software package by using the board private key in the secure world.

Optionally, the processor 310 is further configured to: replace a corresponding software package of an earlier version and a re-signature corresponding to the software package of the earlier version with the to-be-updated software package and a re-signature of the to-be-updated software package, where the software package of the earlier version includes a software package public key of the earlier version.

The embodiment or the optional embodiment corresponding to FIG. 10 may be understood by referring to related descriptions before FIG. 3, and the embodiments or optional embodiments in FIG. 3 and FIG. 5 to FIG. 7. Details are not described herein again.

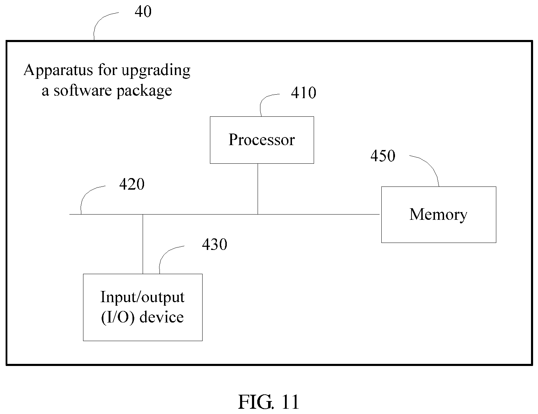

FIG. 11 is a schematic structural diagram of an apparatus 40 for upgrading a software package according to an embodiment of the present invention. The apparatus 40 for upgrading a software package includes a processor 410, a memory 450, and an input/output I/O device 430. The memory 450 may include a read-only memory and a random access memory, and provides an operating instruction and data for the processor 410. A part of the memory 450 may further include a nonvolatile random access memory (NVRAM).

In some implementations, the memory 450 stores the following elements: an executable module or a data structure, or a subset thereof, or an extended set thereof.

In this embodiment of the present invention, by calling the operating instruction stored in the memory 450 (the operating instruction may be stored in an operating system), the processor 410 performs the following operations:
obtaining a to-be-updated software package of a board;
using a software package public key of the to-be-updated software package to check an original signature of the to-be-updated software package in a secure world; and
after the original signature of the to-be-updated software package passes the check, re-signing the to-be-updated software package by using a board private key of the board in the secure world, where the re-signature is used to check security of the software package when the board boots.

According to the apparatus for controlling secure boot of a board provided in this embodiment of the present invention, one set of boards include two key pairs: a board public key, a board private key, a software package public key, and a software package private key. For a signature of a software package that passes a check, the board private key is further used to re-sign the software package, thereby improving storage security of the software package. In addition, a board private key and a board public key of each board are different from board private keys and board public keys of other boards. Therefore, even if a board public key and a board private key of a board are cracked by a hacker, other boards are not affected.

The processor 410 controls an operation of the apparatus 40 for upgrading a software package. The processor 410 may be further referred to as a CPU (Central Processing Unit, central processing unit). The memory 450 may include a read-only memory and a random access memory, and provides an instruction and data for the processor 410. A part of the memory 450 may further include a nonvolatile random access memory (NVRAM). In specific application, all components of the apparatus 40 for upgrading a software package are coupled together by using a bus system 420. In addition to a data bus, the bus system 420 may further include a power bus, a control bus, a status signal bus, and the like. However, for clarity of description, various buses are marked as the bus system 420 in the figure.

The method disclosed in the foregoing embodiment of the present invention may be applied to the processor 410, or be implemented by the processor 410. The processor 410 may be an integrated circuit chip and has a signal processing capability. In an implementation process, steps in the foregoing methods can be implemented by using a hardware integrated logical circuit in the processor 410, or by using instructions in a form of software. The processor 410 may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor 410 may implement or perform the methods, steps, and logical block diagrams that are disclosed in the embodiments of the present invention. The general-purpose processor may be a microprocessor or this processor may be any normal processor, or the like. The steps of the methods disclosed with reference to the embodiments of the present invention may be directly executed and accomplished by means of a hardware decoding processor, or may be executed and accomplished by using a combination of hardware and software modules in the decoding processor. The software module may be located in a mature storage medium in the field, such as a random access memory, a flash memory, a read-only memory, a programmable read-only memory, an electrically erasable programmable memory, or a register. The storage medium is located in the memory 450. The processor 410 reads information in the memory 450, and completes the steps in the foregoing methods in combination with hardware of the processor.

Optionally, the processor 410 is further configured to:
replace a corresponding software package of an earlier version and a re-signature corresponding to the software package of the earlier version with the to-be-updated software package and a re-signature of the to-be-updated software package, where the software package of the earlier version includes a software package public key of the earlier version.

The embodiment or the optional embodiment corresponding to FIG. 11 may be understood by referring to related descriptions before FIG. 3, and the embodiments or optional embodiments in FIG. 4, FIG. 8, and FIG. 9. Details are not described herein again.

A person of ordinary skill in the art may understand that all or a part of the steps of the methods in the embodiments may be implemented by a program instructing relevant hardware. The program may be stored in a computer readable storage medium. The storage medium may include: a ROM, a RAM, a magnetic disk, or an optical disc.

The method and the apparatus for controlling secure boot of a board and the method and the apparatus for upgrading a software package provided in the embodiments of the present invention are described in detail above. The principle and implementation of the present invention are described herein by using specific examples. The description about the foregoing embodiments is merely used to help understand the method and core ideas of the present invention. In addition, a person of ordinary skill in the art can make modifications to the present invention in terms of the specific implementations and application scopes according to the ideas of the present invention. Therefore, the content of specification shall not be construed as a limit to the present invention.

## Claims

1. A method for upgrading a software package performed by an apparatus for controlling a secure boot of a board, the method comprising:
• obtaining a new software package of the board (S 201);
• using a software package public key contained in the new software package to check an original signature of the new software package, wherein the original signature is contained in a secure world of a central processing unit on the board, wherein the secure world of the central processing unit is physically isolated from a normal world of the central processing unit (S 202);
• after the original signature of the new software package passes the check, re-signing the new software package by using a board private key of the board in the secure world, thereby arriving at a re-signature of the new software package, wherein the re-signature is used to check security of the software package when the board boots (S 203);
• storing the new software package and the re-signature of the new software package in the board, and subsequently replacing, in the board, a corresponding software package of an earlier version and a re-signature corresponding to the software package of the earlier version with the new software package and the re-signature of the new software package, wherein the software package of the earlier version comprises a software package public key of the earlier version.

2. The method according to claim 1, wherein the check and the re-signing are completed at a time in a trusted environment of the secure world.

3. An apparatus for controlling secure boot of a board, wherein the apparatus is configured to execute the method according to any one of claims 1 to 2.

4. A readable storage medium comprising instructions, which, when executed by a computer, cause the computer to carry out the method of any one of claims 1 to 2.

## Patentansprüche

1. Verfahren zum Aufrüsten eines Softwarepakets, das durch eine Vorrichtung zur Steuerung eines sicheren Bootens einer Platine ausgeführt wird, wobei das Verfahren Folgendes umfasst:
• Erhalten eines neuen Softwarepakets der Platine (S 201);
• Verwenden eines in dem neuen Softwarepaket enthaltenen öffentlichen Schlüssels des Softwarepakets zum Prüfen einer Originalsignatur des neuen Softwarepakets, wobei die Originalsignatur in einer sicheren Welt einer Zentralverarbeitungseinheit auf der Platine enthalten ist, wobei die sichere Welt der Zentralverarbeitungseinheit von einer normalen Welt der Zentralverarbeitungseinheit physisch isoliert ist (S202);
• Neuzuweisen des neuen Softwarepakets, nachdem die Originalsignatur des neuen Softwarepakets die Prüfung besteht, durch Verwendung eines privaten Platinenschlüssels der Platine in der sicheren Welt, um dadurch zu einer Neusignatur des neuen Softwarepakets zu kommen, wobei die Neusignatur zum Prüfen von Sicherheit des Softwarepakets, wenn die Platine bootet, verwendet wird (S 203);
• Speichern des neuen Softwarepakets und der Neusignatur des neuen Softwarepakets in der Platine und nachfolgendes Ersetzen in der Platine eines entsprechenden Softwarepakets einer früheren Version und einer dem Softwarepaket der früheren Version entsprechenden Neusignatur mit dem neuen Softwarepaket und der Neusignatur des neuen Softwarepakets, wobei das Softwarepaket der früheren Version einen öffentlichen Schlüssel des Softwarepakets der früheren Version umfasst.

2. Verfahren nach Anspruch 1, wobei die Prüfung und das Neusignieren zu einem Zeitpunkt in einer vertrauenswürdigen Umgebung der sicheren Welt abgeschlossen werden.

3. Vorrichtung zum Steuern des sicheren Bootens einer Platine, wobei die Vorrichtung dafür ausgelegt ist, das Verfahren nach einem der Ansprüche 1 bis 2 auszuführen.

4. Lesbares Speichermedium mit Anweisungen, die, wenn sie durch einen Computer ausgeführt werden, bewirken, dass der Computer das Verfahren nach einem der Ansprüche 1 bis 2 ausführt.

## Revendications

1. Procédé de mise à jour de progiciel effectué par un appareil de commande d'amorçage sécurisé d'une carte, le procédé comprenant les étapes consistant à :
• obtenir un nouveau progiciel de la carte (S201) ;
• utiliser une clé publique de progiciel contenue dans le nouveau progiciel pour vérifier une signature originale du nouveau progiciel, la signature originale étant contenue dans un monde sécurisé d'une unité centrale de traitement de la carte, le monde sécurisé de l'unité centrale de traitement étant isolé physiquement d'un monde normal de l'unité centrale de traitement (S202) ;
• après que la signature originale du nouveau progiciel a réussi la vérification, re-signer le nouveau progiciel en utilisant une clé privée de carte de la carte dans le monde sécurisé, de façon à parvenir à une re-signature du nouveau progiciel, la re-signature servant à vérifier la sécurité du progiciel lorsque la carte démarre (S203) ;
• stocker le nouveau progiciel et la re-signature du nouveau progiciel dans la carte, puis remplacer, dans la carte, un progiciel correspondant d'une version antérieure et une re-signature correspondant au progiciel de la version antérieure par le nouveau progiciel et la re-signature du nouveau progiciel, le progiciel de la version antérieure contenant une clé publique de progiciel de la version antérieure.

2. Procédé selon la revendication 1, dans lequel la vérification et l'exécution de la re-signature sont effectuées à un temps dans un environnement de confiance du monde sécurisé.

3. Appareil de commande d'amorçage sécurisé d'une carte, l'appareil étant configuré pour exécuter le procédé selon l'une quelconque des revendications 1 et 2.

4. Support de stockage lisible contenant des instructions qui, lorsqu'elles sont exécutées par un ordinateur, amènent l'ordinateur à mettre en œuvre le procédé selon l'une quelconque des revendications 1 et 2.
